# EUROPÄISCHE PATENTSCHRIFT

(11) **EP 1 479 837 B1**
(45) Veröffentlichungstag und Bekanntmachung des Hinweises auf die Patenterteilung: **20.12.2006**
(21) Anmeldenummer: 04010622.1
(22) Anmeldetag: 05.05.2004
(51) Int. Cl.: G05D 23/13

(54) **Verfahren und Vorrichtung zur Regelung des Warmwasserzulaufs zu einem Behälter**
Device and method for regulating the warm water supply into a receptacle
Dispositif et procédé de regulation d'eau chaude dans un réservoir

(30) Priorität: 22.05.2003 CH 9192003
(43) Veröffentlichungstag der Anmeldung: 24.11.2004
(73) Patentinhaber: KWC AG, CH-5726 Unterkulm (CH)
(72) Erfinder: Hugger, Werner, 5722 Gränichen (CH)
(74) Vertreter: Schaad, Balass, Menzl & Partner AG

(56) Entgegenhaltungen:
- EP-A- 1 249 544
- DE-A1- 3 546 550
- DE-A1- 3 925 590
- DE-U1- 29 620 414

## Beschreibung

Die Erfindung betrifft ein Verfahren und eine Vorrichtung zur Regelung des Warmwasserzulaufs zu einem Behälter entsprechend dem Oberbegriff des Anspruchs 1 beziehungsweise des Anspruchs 4.

Die Bereitstellung definierter Volumina von Flüssigkeiten bestimmter Temperatur ist eine häufig anzutreffende Aufgabenstellung in verschiedenen Bereichen privater Haushalte, zum Beispiel in Bädern und Küchen, des Dienstleistungsgewerbes, zum Beispiel der Gastronomie, aber auch in der Industrie, insbesondere der Chemie- und Lebensmittelindustrie, der Landwirtschaft und im öffentlichen Sektor, etwa im Gesundheitswesen. Im allgemeinen werden zu diesem Zweck Teilvolumina mit einem Vorlauf niedrigerer Temperatur als die gewünschte Solltemperatur (im folgenden Mischtemperatur genannt), und Teilvolumina mit einem Vorlauf mit höherer Temperatur als die gewünschte Solltemperatur (Mischtemperatur) miteinander gemischt. In den meisten Fällen handelt es sich bei den Flüssigkeiten um Wasser oder wässerige Lösungen, so dass im folgenden dieser Fall beschrieben wird. Alle Ausführungen können jedoch auf nahezu beliebige Flüssigkeiten ausgedehnt werden.

Mischvorrichtungen, im Sanitärbereich auch Mischarmaturen oder Mischbatterien genannt, die am Ausfluss eine definierte Mischtemperatur mit Hilfe einer Steuerung, die Stellglieder zum Einstellen der Durchflussvolumina einer Warm- und Kaltwasserzuleitung in Abhängigkeit der momentanen, mit einer Temperaturmesseinrichtung bestimmten Mischtemperatur steuern, sind zum Beispiel in der DE-A-3'546'550 und der entsprechenden US-A-4,693,415 beschrieben.

Eine Vorrichtung und ein Verfahren der eingangs genannten Art, welche beziehungsweise welches neben einer Steuerung der Mischtemperatur zudem ein bestimmtes Gesamtvolumen bereitstellt, ist beispielsweise aus der EP-A-1'249'544 und der entsprechenden US-A-6,473,917 bekannt. Dabei wird das ausgeflossene Teilvolumen mittels einer vor dem Ausfluss in der Mischwasserleitung installierten Durchflussmesseinrichtung oder über eine Einrichtung zur Erfassung der Füllstandshöhe in einem Auffangbehälter gemessen und mit dem vorbestimmten Gesamtvolumen verglichen.

Dokument DE 29620414 U beschreibt eine Vorrichtung zur wiederholbaren Dosierung von Fluids.

Die beschriebenen Verfahren und Vorrichtungen basieren dabei auf der Annahme, dass bei einer Regelung der Mischtemperatur der ausfliessenden Flüssigkeit auch das ausgeflossene Gesamtvolumen (auch Sollvolumen genannt) diese Mischtemperatur besitzt. In der Praxis weicht jedoch die Solltemperatur des Gesamtvolumens von der Mischtemperatur des Ausflusses ab. Gründe dafür sind beispielsweise erwärmte beziehungsweise abgekühlte Flüssigkeiten in den Zulaufleitungen, plötzliche Druckund in Folge dessen auch Durchflussänderungen in den Zuflussleitungen sowie Einschwingvorgänge der Steuer- und Regelkreise. Dadurch bedingte Abweichungen der Mischtemperatur von der Solltemperatur führen in der Summe zu den in der Praxis beobachteten Abweichung.

Die Aufgabe der vorliegenden Erfindung besteht somit darin, ein Verfahren und eine Vorrichtung der eingangs genannten Art zu schaffen, welche beziehungsweise welches es erlaubt, bei einem vorgegebenen Gesamtvolumen die gewünschte, ebenfalls vorgegebene Solltemperatur tatsächlich zu erreichen. Dabei sollte eine kostengünstige Herstellung der Vorrichtung gewährleistet sein.

Diese Aufgabe wird erfindungsgemäss mit einem Verfahren gemäss Anspruch 1 und einer Vorrichtung gemäss Anspruch 4 gelöst.

Die vorliegende Erfindung bietet ein integrales Regelprinzip zum Erreichen einer vorgegebenen Solltemperatur eines bestimmten ausgeflossenen Gesamtvolumens an. Zu diesem Zweck sind in einem Leitungssystem für Flüssigkeiten zwischen zwei Zuflüssen und einem Ausfluss eine Mischeinrichtung mit elektrisch, pneumatisch oder hydraulisch steuerbaren Stellgliedern, deren Steuersignale von einer mit den Stellgliedern verbundenen Regeleinheit geliefert werden, und stromabwärts der Mischeinrichtung eine Durchfluss- und Temperaturmesseinrichtung angeordnet.

Gemäss dem erfindungsgemässen Verfahren werden nach einer Initialisierungsprozedur die von der Temperatur- und Durchflussmesseinrichtung gelieferten Signale von einer Regeleinheit weiterverarbeitet und sowohl das ausgeflossene Teilvolumen als auch die damit verbundene Istwärmemenge berechnet. Die in einem bestimmten Zeitintervall transportierte Wärmemenge ist dabei proportional zum durchflossenen Teilvolumen der Flüssigkeit während des Zeitintervalls, der Dauer des Zeitintervalls und der Temperaturdifferenz zwischen der Mischtemperatur und einer Bezugstemperatur. Die seit dem Startzeitpunkt des Ausflusses mit dem ausgeflossenen Volumen transportierte Wärmemenge wird in der Regeleinheit fortlaufend integriert. Somit sind die integralen Werte, also das ausgeflossene Teilvolumen und die damit transportierte Istwärmemenge, einschliesslich möglicher Abweichungen der Mischtemperatur von der Solltemperatur, am jeweiligen Messzeitpunkt bekannt. Aus diesen Daten berechnet die Regeleinheit die verbleibende Differenz aus der Sollwärmemenge des Gesamtvolumens und der Istwärmemenge des ausgeflossenen Teilvolumens. Unter Berücksichtigung der Differenz des Gesamtvolumens und des bereits ausgeflossenen Teilvolumens wird eine neue einzuregelnde Mischtemperatur und die entsprechenden Stellwerte zum Einstellen des Mischverhältnisses von Kaltund Warmwasserzufluss für das Mischventil ermittelt. Die Regelung erfolgt bis das vorbestimmte Gesamtvolumen ausgeflossen ist. Im Fehlerfall wird die Regelung beim Überschreiten von Grenzwerten, die vom System selbst überwacht werden, zum Beispiel einem Maximalwert der Mischtemperatur, oder durch Eingriff eines Benutzers unterbrochen. Sollte im normalen Regelungsbetrieb die Sollwärmemenge, beispielsweise aufgrund einer zu niedrigen Vorlauftemperatur des Warmwasser, oder das Gesamtvolumen nicht erreicht werden oder andere Fehlfunktionen auftreten, werden entsprechende Warnungen an den Benutzer ausgegeben.

Das erfindungsgemässe Verfahren und die entsprechende Vorrichtung zeichnen sich durch eine hohe Präzision und Robustheit trotz Verwendung kostengünstiger und einfacher Komponenten aus, da Abweichungen der Mischtemperatur von der Solltemperatur über die fortlaufende Integration der mit dem ausgeflossenen Teilvolumen transportierten Wärmemenge erfasst und in die Regelung der Mischwassertemperatur einbezogen werden. Das Gesamtvolumen muss nicht durch eine zusätzliche Füllstandmesseinrichtung bestimmt werden und eine mögliche Wärmeabstrahlung während des Ausflussvorganges kann nach einer Kalibration auf einfache Weise während der Integrationsprozedur in Abzug gebracht und somit in die Regelung einbezogen werden.

Anhand der Zeichnungen wird im Folgenden eine Ausführungsform der Erfindung näher erläutert. Es zeigen:
- Fig. 1: schematisch den prinzipiellen Aufbau einer automatisierten Mischarmatur einschliesslich einer Fernbedienung und einer parallel dazu geführten, handbetriebenen Mischarmatur, und
- Fig. 2: ein Diagramm zur prinzipiellen Darstellung des Regelverhaltens der in Fig. 1 gezeigten automatisierten Mischarmatur.

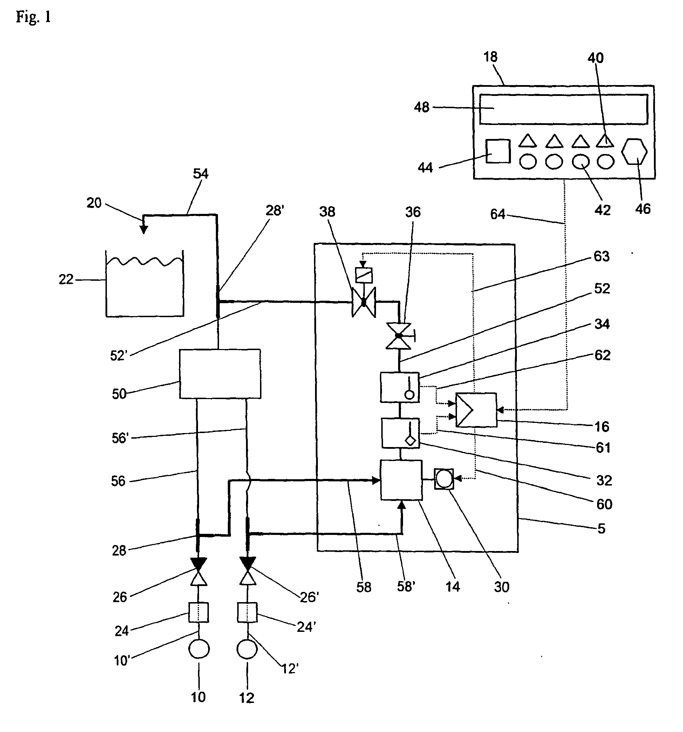

Bei der in Fig. 1 dargestellten Ausführungsform ist eine automatisierte Mischarmatur 5 parallel zu einer handbetriebenen Mischarmatur 50 bekannter Art in ein Leitungssystem für Warm- und Kaltwasser integriert. Die Mischarmaturen 5,50 sind zwischen einen Zufluss 10 für Kaltwasser und einen Zufluss 12 für Warmwasser sowie einen Ausfluss 20 geschaltet. An die Zuflüsse 10, 12, die beispielsweise Wasser mit einer Vorlauftemperatur von 15°C beziehungsweise 65°C bereitstellen, sind Zuflussleitungen 10', 12' für Kalt- beziehungsweise Warmwasser angeschlossen.

In jede Zuflussleitung 10', 12' ist je ein Filterelement 24, 24' eingesetzt, um die in den Zuflussleitungen 10', 12' mitgeführten Verunreinigungen zurückzuhalten. Ein mögliches Rückströmen von Wasser aus dem stromaufwärts verlaufenden Leitungssystem ist durch Rückflusssperrorgane 26, 26', je eines in der Kalt- und eines in der Warmwasserzuflussleitung 10', 12', verhindert. Mittels zweier T-Stücke 28 wird der Wasserfluss anschliessend zu je zwei Kaltwasserleitungen 56, 58 und zwei Warmwasserleitungen 56', 58' geleitet.

Stromabwärts folgen den Paaren aus je einer Kaltwasserleitung 56, 58 und einer Warmwasserleitung 56', 58' einerseits die Mischarmatur 50 bekannter Art zur Handbetätigung und andererseits die Mischarmatur 5 zur automatisierten Mischung. In der beschriebenen Ausführungsform arbeiten die Mischarmaturen 50, 5 voneinander unabhängig. Die Mischarmatur 50 ermöglicht es, den Ausfluss von Mischwasser temperatur- und mengenmässig von Hand einzustellen. Die von Hand betätigte Mischarmatur 50 ist jedoch für ein einwandfreies Funktionieren der automatisierten Mischarmatur 5 nicht erforderlich und kann gegebenenfalls wegfallen.

Stromabwärts der Mischarmatur 5, 50 ist eine Ausflussleitung 54, die zum Ausfluss 20 führt, vorgesehen.

Die zur automatisierten Mischarmatur 5 führenden Kalt- und Warmwasserleitungen 58, 58' münden in ein als Stellglied dienendes Mischventil 14 mit einer Mischkammer, das von bekannter Bauart ist. Das Mischventil 14 ist mit einem elektrischen Stellmotor 30 ausgestattet, der in Abhängigkeit eines Stellweges das Durchflussverhältnis des in die Mischkammer einströmenden warmen und kalten Wassers steuert. Das Mischventil 14 kann gegebenenfalls durch eine Anordnung bestehend aus zwei Stellventilen, je eines für die Kalt- und Warmwasserleitung 58, 58', und einer Mischkammer ersetzt werden.

Die Signale zur Ansteuerung des Stellmotors 30 werden über eine Signalleitung 60 von einer Regeleinheit 16 geliefert.

Die Regeleinheit 16 ist mit einer Ein- beziehungsweise Ausgabeeinheit, einem Mikroprozessor und einer Speichereinheit ausgestattet. Die Regelfunktion zur Verarbeitung der Eingabesignale und Bestimmung der Ausgabesignale ist in Form eines Programmcodes in der Regeleinheit 16 abgelegt. Die Regeleinheit 16 und Signalleitungen 60, 61, 62, 63, 64 können sowohl teilweise als auch vollständig als pneumatische oder hydraulische, vorzugsweise jedoch elektrische Regelkreiselemente ausgeführt sein. In der beschriebenen Ausführungsform handelt es sich um einen elektrischen Regelkreis mit einer digitalen Signalverarbeitung und Signalübermittlung.

Die Eingabe von Parametern und Steuersignalen an die Regeleinheit 16 erfolgt über ein Fernbedienungsgerät 18. Die Regeleinheit 16 und das Fernbedienungsgerät 18 sind über die Signalleitung 64 miteinander verbunden. Die Signalübermittlung kann auch über eine pneumatische oder hydraulische Leitung, per Infrarot- oder Funkübertragung oder auf andere Weise erfolgen. Das Fernbedienungsgerät 18 kann an einer von der Mischarmatur 5 entfernten Stelle angeordnet oder fest mit der Mischarmatur 5 verbunden sein. Das Fernbedienungsgerät 18 weist Taster oder Schalter 40 zur Vorwahl eines Gesamtvolumens von beispielsweise 2, 5, 10 und 20 Litern, Taster oder Schalter 42 zur Vorwahl der Solltemperatur des Wassers im bereitzustellenden Gesamtvolumen, beispielsweise von 20°C, 30°C, 40°C und 50°C, einen Start-Taster 44 zum Starten des automatisierten Mischverfahrens und einen Stopp-Taster 46 zum Stoppen des Mischverfahrens auf. Weiterhin verfügt das Fernbedienungsgerät 18 über eine Anzeige 48 zur Darstellung der vorgewählten Parameter, der aktuellen Mischtemperatur und des bereits ausgeflossenen Teilvolumens. Weitere Informationen über den Systemzustand können ebenfalls dargestellt werden. Zusätzliche Signale und Parameter, beispielsweise der Durchfluss oder individuelle Werte für das Gesamtvolumen und die Solltemperatur, können mit einer erweiterten Tastatur eingegeben und an die Regeleinheit 16 weitergeleitet werden.

Die von der Regeleinheit 16 über die Signalleitung 60 an den Stellmotor 30 eines Mischventils 14 geleiteten Steuersignale bewirken die Einstellung eines bestimmten Mischverhältnisses von Warm- und Kaltwasser in der Mischkammer des Mischventils 14.

Das Mischwasser passiert nach dem Austritt aus der Mischkammer des Mischventils 14 eine Durchflussmesseinrichtung 32. Die Durchflussmesseinrichtung 32 liefert über die Signalleitung 61 elektrische Signale in Abhängigkeit vom Mischwasserdurchfluss an die Regeleinheit 16.

Die Mischtemperatur des Wassers wird durch eine stromabwärts der Durchflussmesseinrichtung 32 in einer Mischwasserleitung 52 angeordnete Temperaturmesseinrichtung 34 ermittelt. Von der Temperaturmesseinrichtung 34 erzeugte elektrische Signale werden über die elektrische Signalleitung 62 zur Regeleinheit 16 geleitet.

Die Anordnung der Durchflussmesseinrichtung 32 und der Temperaturmesseinrichtung 34 in der Mischwasserleitung 52 kann gegebenenfalls vertauscht werden.

Stromabwärts folgt der Temperaturmesseinrichtung 34 ein Absperrventil 36, welches von Hand zu bedienen ist. Es dient Sicherheits- und Wartungszwecken und ermöglicht ein zusätzliches Absperren, ist jedoch für den normalen Mischbetrieb nicht notwendig.

Ein weiteres, stromabwärts folgendes Absperrventil 38 ist als Magnetventil ausgeführt. Der Stellantrieb des Absperrventils 38 ist durch die Signalleitung 63 mit der Regeleinheit 16 verbunden. Durch ein entsprechendes Signal von der Regeleinheit 16 wird im Fall, dass das ausgelaufene Teilvolumen dem vorgegebenen Gesamtvolumen entspricht oder der Benutzer ein Signal zum Stoppen des Mischvorganges auslöst, der Mischwasserfluss unterbrochen. Das Absperrventil 38 kann auch als Stellventil ausgeführt sein, wodurch es bei entsprechenden Anpassungen der Regeleinheit 16 möglich wird, den Mischwasserdurchfluss zwischen keinem Durchfluss bis zu einem Maximaldurchfluss zu steuern.

Das bereitgestellte Mischwasser fliesst hinter dem Absperrventil 38 durch ein Mischwasserleitungsstück 52', das über ein T-Stück 28' mit der Abflussleitung 54 verbunden ist. Das aus dem Ausfluss 20 ausfliessende Wasser wird in einem Behälter 22 aufgefangen.

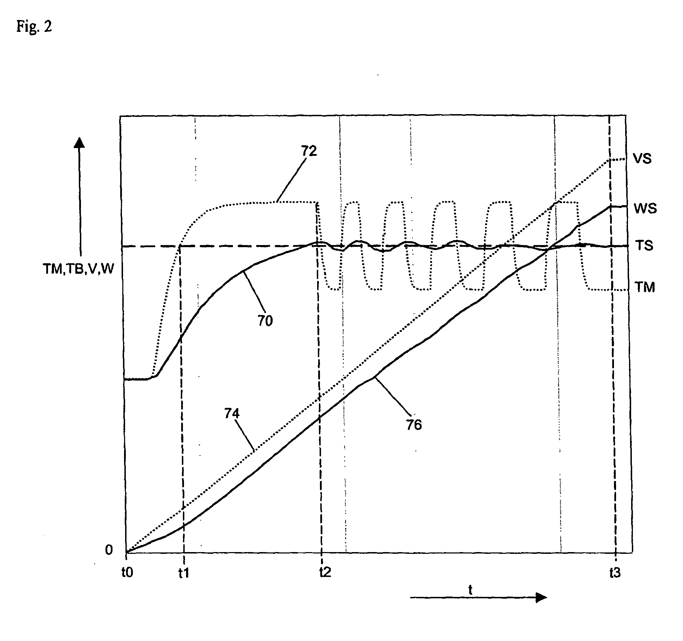

Im folgenden wird das Verfahren am Beispiel eines typischen, in Fig. 2 dargestellten Füllvorgangs beschrieben.

Dazu sind im Diagramm von Fig. 2 ein qualitativer Verlauf der Mischwassertemperatur TM (Kurve 72), der Verlauf der Temperatur TB des im Behälter 22 befindlichen Wassers mit einem Teilvolumen V (Kurve 70), der Verlauf des Teilvolumens V selbst (Kurve 74) und der Verlauf einer mit dem Teilvolumen V deponiert Wärmemenge W im Behälter 22 (Istwärmemenge) (Kurve 76) als Funktion der Zeit t gezeigt.

Der durch Betätigung des Tasters 44 am Fernbedienungsgerät 18 festgelegte Startzeitpunkt ist mit t0 bezeichnet. Am Startzeitpunkt t0 des Füllvorgangs wird zunächst eine Sollwärmemenge WS aus dem vorgegebenen Gesamtvolumen (Füllmenge) VS und der Solltemperatur TS berechnet. Anschliessend wird das Absperrventil 38 geöffnet und Mischwasser fliesst aus dem Ausfluss 20 in den Behälter 22. Entsprechend steigt das Teilvolumen V, wie in der Kurve 74 gezeigt, an.

Aus den fortlaufend erfassten Daten des Mischwasserdurchflusses und der Mischtemperatur TM werden das Teilvolumen V und die mit dem ausgeflossen Wasser transportierte Wärmemenge W durch Integration bestimmt.

Die Regeleinheit 16 vergleicht nun fortlaufend das Teilvolumen V mit dem Gesamtvolumen VS und die darin enthaltene Wärmemenge W mit der Sollwärmemenge WS. Aus den Differenzen der verglichenen Daten, das heisst einem Restvolumen und einer Restwärmemenge, wird eine neue einzuregelnde Mischtemperatur und der entsprechende Stellwert für das Mischventil 14 bestimmt. Dabei wird stets die tatsächliche, mit dem Teilvolumen V transportierte Wärmemenge W als Basis für die Bestimmung der einzuregelnden Mischtemperatur benutzt. Auf diese Weise sind vorhergehende Abweichungen aufgrund von gekühlten oder erwärmten Wasservorläufen, von Einschwingvorgängen der Regelung, von plötzlichen Druckund Durchflussschwankungen und weiteren Störeinflüssen erfasst und werden durch den Regelkreis kompensiert.

Bei dem in Fig. 2 dargestellten Füllvorgang steigt durch entsprechende Ansteuerung des Stellmotors 30 zunächst im Zeitabschnitt t0 - t1 die Mischtemperatur TM und die Temperatur TB im ausgeflossenen Teilvolumen V mit einer kurzen Zeitverzögerung an und nähert sich bis zum Zeitpunkt t1 der Solltemperatur TS. Im Gegensatz zu den bekannten Regelungsverfahren wird die Mischtemperatur TM jedoch nicht in Bezug auf die Solltemperatur TS sondern in Bezug auf die Sollwärmemenge WS geregelt, was zur Folge hat, dass in der Phase t1 - t2 die Mischtemperatur TM über die Solltemperatur TS hinaus ansteigt. Auf diese Weise wird ein Wärmemengendefizit aus dem Zeitabschnitt t0 - t1 kompensiert. Der Wärmemengenausgleich ist zum Zeitpunkt t2 abgeschlossen und die Mischtemperatur TM bewegt sich von da an etwa um die Solltemperatur TS (Kurve 72).

Die Temperatur TB im Behälter 22 folgt zeitverzögert im wesentlichen der Mischtemperatur TM (Kurve 70). Temperaturmaxima und -minima sind dabei mit zunehmendem Teilvolumen V stärker gedämpft.

Das Teilvolumen V zeigt während des gesamten Füllvorgangs einen nahezu linearen Verlauf. Dieses Verhalten ist auf einen etwa konstanten Mischwasserdurchfluss zurückzuführen. Der Zeitpunkt t3 des Stoppens des Füllvorgangs ist dadurch bestimmt, dass das ausgeflossene Teilvolumen V dem vorgewählten Gesamtvolumen VS entspricht.

Die Istwärmemenge W folgt wiederum näherungsweise dem Verlauf des Teilvolumens V, ist aber durch die Änderungen der Temperatur TB im Behälter 22 entsprechend moduliert. Zum Stoppzeitpunkt t3 stimmt die im Behälter 22 gemessene Istwärmemenge W mit der berechneten Sollwärmemenge WS überein.

Somit entspricht am Ende des Füllvorganges, bei vernachlässigbarer Wärmeabgabe des Wassers an den Behälter 22 und die Umgebung, auch die Mischtemperatur TM der gewünschten Solltemperatur TS bei der voreingestellten Füllmenge VS.

Bei der Bestimmung der Restwärmemenge kann durch Einbeziehung von Korrekturendaten zum Wärmeverlust, beispielsweise basierend auf Kalibrationsmessungen vom Befüllen verschiedenartiger Behälter unter bestimmten Umgebungsbedingungen, Abweichungen zwischen der mit dem Wasser einzubringenden Sollwärmemenge und der tatsächlich im Behälter deponierten Wärmemenge minimiert und dadurch die Präzision des Verfahrens erhöht werden.

## Patentansprüche

1. Verfahren zur Steuerung des Flüssigkeitszulaufes zu einem Behälter (22), der bis zu einem vorgegebenen Gesamtvolumen (VS) mit einer vorgegebenen Solltemperatur (TS) zu füllen ist, bei dem der Durchfluss der Flüssigkeit, vorzugsweise Mischwasser, sowie die Mischtemperatur (TM) der Flüssigkeit ermittelt wird und beim Erreichen einer vorgegebenen Gesamtdurchflussmenge die Flüssigkeitszufuhr unterbrochen wird, **dadurch gekennzeichnet, dass** durch jeweiliges Erhöhen oder Vermindern der Mischtemperatur (TM) dafür gesorgt wird, dass nach Abschluss des Füllvorganges die im Gesamtvolumen (VS) des Behälters (22) enthaltene Wärmemenge (W) zumindest annähernd der Sollwärmemenge (WS) entspricht, die sich aus dem jeweils vorgegebenen Gesamtvolumen (VS) und dessen vorgegebener Solltemperatur (TS) ergibt.

2. Verfahren nach Anspruch 1, **dadurch gekennzeichnet, dass** fortlaufend aufgrund des Durchflusses und der gemessenen Mischtemperatur (TM) seit einem Startzeitpunkt (t0) die in einem bereits ausgeflossenen Teilvolumen enthaltene Istwärmemenge ermittelt wird, und anschliessend aufgrund dieser Ermittlung und basierend auf der im jeweils vorgegebenen Gesamtvolumen (VS) bei der vorgegebenen Solltemperatur (TS) zu speichernden Sollwärmemenge (WS) gegebenenfalls die Mischtemperatur (TM) durch Aendern eines Mischverhältnisses zwischen einer Flüssigkeit mit höherer Temperatur als die Solltemperatur (TS), vorzugsweise Warmwasser, und einer Flüssigkeit mit tieferer Temperatur als die Solltemperatur (TS), vorzugsweise Kaltwasser, erhöht oder vermindert wird.

3. Verfahren nach Anspruch 2, **dadurch gekennzeichnet, dass** die in einem bereits ausgeflossenen Teilvolumen enthaltene Istwärmemenge durch Integration ermittelt wird.

4. Vorrichtung zur Durchführung des Verfahrens nach einem der Ansprüche 1 bis 3, wobei in einer Leitung (52) für eine Flüssigkeit, vorzugsweise Mischwasser, eine Temperaturmesseinrichtung (34) zum Messen der Mischtemperatur (TM) sowie eine Durchflussmesseinrichtung (32) angeordnet sind, die beide an eine Regeleinheit (16) angeschlossen sind, mit der ein in der Leitung (52) angeordnetes erstes Absperrventil (38) steuerungsmässig verbunden ist, **dadurch gekennzeichnet, dass** die Regeleinheit (16) dazu bestimmt-ist, durch jeweiliges Erhöhen oder Vermindern der Mischtemperatur (TM) dafür zu sorgen, dass nach Abschluss des Füllvorganges die im Gesamtvolumen (VS) des Behälters (22) enthaltene Wärmemenge (W) zumindest annähernd der Sollwärmemenge (WS) entspricht, die sich aus dem jeweils vorgegebenen Gesamtvolumen (VS) und dessen vorgegebener Solltemperatur (TS) ergibt, sowie beim Erreichen einer vorgegebenen Gesamtdurchflussmenge die Flüssigkeitszufuhr durch Betätigen des ersten Absperrventils (38) zu unterbrechen.

5. Vorrichtung nach Anspruch 4, **dadurch gekennzeichnet, dass** in der Leitung (52) weiter ein mit der Regeleinheit (16) steuerungsmässig verbundenes Mischventil (14) angeordnet ist, das der Temperaturmesseinrichtung (34) und der Durchflussmesseinrichtung (32) vorgeschaltet ist und an das eine erste Zuleitung (58') für eine Flüssigkeit mit einer höheren Temperatur als die Solltemperatur (TS), vorzugsweise Warmwasser, und eine zweite Zuleitung (58) für eine Flüssigkeit mit einer tieferen Temperatur als die Solltemperatur (TS), vorzugsweise Kaltwasser, angeschlossen ist, wobei die Regeleinheit (16) dazu bestimmt ist, fortlaufend aufgrund des Durchflusses und der gemessenen Mischtemperatur (TM) seit einem Startzeitpunkt (t0) die in einem bereits ausgeflossenen Teilvolumen enthaltene Istwärmemenge zu ermitteln und anschliessend aufgrund dieser Ermittlung und basierend auf der im jeweils vorgegebenen Gesamtvolumen (VS) bei der vorgegebenen Solltemperatur (TS) zu speichernden Sollwärmemenge (WS) gegebenenfalls die Mischtemperatur (TM) durch Aendern eines Mischverhältnisses zwischen der über die erste Zuleitung (58') zugeführten Flüssigkeit und der über die zweite Zuleitung (58) zugeführten Flüssigkeit zu erhöhen oder zu vermindern.

6. Vorrichtung nach Anspruch 5, **dadurch gekennzeichnet, dass** die Regeleinheit (16) die in einem bereits ausgeflossenen Teilvolumen enthaltene Istwärmemenge durch Integration ermittelt.

7. Vorrichtung nach Anspruch 5, **dadurch gekennzeichnet, dass** das Mischventil (14) einen Stellmotor (30) aufweist, der von der Regeleinheit (16) ansteuerbar ist.

8. Vorrichtung nach Anspruch 4, **gekennzeichnet durch** ein an die Regeleinheit (16) angeschlossenes Fernbedienungsgerät (18) mit einer Tastatur (40, 42) zum Eingeben zumindest des Gesamtvolumens (VS) bzw. der Gesamtdurchflussmenge und der Solltemperatur (TS).

9. Vorrichtung nach Anspruch 5, **dadurch gekennzeichnet, dass** in der Leitung (52) ein zweites, manuell betätigbares Absperrventil (36) angeordnet ist, das dem Mischventil (14) nachgeschaltet ist.

10. Vorrichtung nach Anspruch 5, **dadurch gekennzeichnet, dass** das Mischventil (14), die Durchflussmesseinrichtung (32), die Temperaturmesseinrichtung (34) und das erste Absperrventil (38) zu einer, als automatisch arbeitende Mischarmatur (5) ausgebildeten Baueinheit zusammengefasst sind.

11. Vorrichtung nach den Ansprüchen 9 und 10, **dadurch gekennzeichnet, dass** auch das zweite Absperrventil (36) in der Mischarmatur (5) untergebracht ist.

12. Vorrichtung nach Anspruch 10, **dadurch gekennzeichnet, dass** zur automatisch arbeitenden Mischarmatur (5) eine zweite, von Hand bedienbare Mischarmatur (50) parallel geschaltet ist.

## Claims

1. Method for controlling the inflow of liquid to a container (22) which is to be filled up to a predetermined overall volume (VS) with a predetermined desired temperature (TS), in which the throughflow of the liquid, preferably mixing water, and the mixing temperature (TM) of the liquid are determined, and, when a predetermined overall throughflow quantity is achieved, the supply of liquid is interrupted, **characterized in that**, by a respective increase or reduction in the mixing temperature (TM), care is taken to ensure that, after the conclusion of the filling operation, the heat quantity (W) contained in the overall volume (VS) of the container (22) corresponds at least approximately to the desired heat quantity (WS) which is obtained from the respectively predetermined overall volume (VS) and its predetermined desired temperature (TS).

2. Method according to Claim 1, **characterized in that** the actual heat quantity contained in a part volume which has already flowed out is determined continuously on the basis of the throughflow and of the measured mixing temperature (TM) since a starting time point (t0), and, subsequently, as a result of this determination, and based on the desired heat quantity. (WS) to be stored in the respectively predetermined overall volume (VS) at the predetermined desired temperature (TS), if appropriate, the mixing temperature (TM) is increased or reduced by changing a mixing ratio between a liquid having a higher temperature than the desired temperature (TS), preferably hot water, and a liquid having a lower temperature than the desired temperature (TS), preferably cold water.

3. Method according to Claim 2, **characterized in that** the actual heat quantity contained in a part volume which has already flowed out is determined by integration.

4. Appliance for carrying out the method according to one of Claims 1 to 3, a line (52) for a liquid, preferably mixing water, having arranged in it a temperature measuring device (34) for measuring the mixing temperature (TM) and a throughflow measuring device (32) which are both connected to a regulating unit (16), to which a first shut-off valve (38) arranged in the line (52) is connected in control terms, **characterized in that** the regulating unit (16) is intended to ensure, by respective increase or reduction in the mixing temperature (TM), that, after the conclusion of the filling operation, the heat quantity (W) contained in the overall volume (VS) of the container (22) corresponds at least approximately to the desired heat quantity (WS) which is obtained from the respectively predetermined overall volume (VS) and its predetermined desired temperature (TS), and, when a predetermined overall throughflow quantity is achieved, to interrupt the supply of liquid by actuation of the first shut-off valve (38).

5. Appliance according to Claim 4, **characterized in that** the line (52) has arranged in it, further, a mixing valve (14) which is connected in control terms to the regulating unit (16) and which precedes the temperature measuring device (34) and the throughflow measuring device (32) and to which are connected a first supply line (58') for a liquid having a higher temperature than the desired temperature (TS), preferably hot water, and a second supply line (58) for a liquid having a lower temperature than the desired temperature (TS), preferably cold water, the regulating unit (16) being intended to determine continuously, on the basis of the throughflow and of the measured mixing temperature (TM), since a starting time point (t0), the actual heat quantity contained in a part volume which has already flowed out, and, subsequently, by virtue of this determination, and based on the desired heat volume (WS) to be stored in the respectively predetermined overall volume (VS) at the predetermined desired temperature (TS), if appropriate, to increase or reduce the mixing temperature (TM) by changing a mixing ratio between the liquid supplied via the first supply line (58') and the liquid supplied via the second supply line (58).

6. Appliance according to Claim 5, **characterized in that** the regulating unit (16) determines by integration the actual heat quantity contained in a part volume which has already flowed out.

7. Appliance according to Claim 5, **characterized in that** the mixing valve (14) has a servomotor (30) which can be activated by the regulating unit (16).

8. Appliance according to Claim 4, **characterized in that** there is a remote control apparatus (18) connected to the regulating unit (16) and having a keyboard (40, 42) for the input of at least the overall volume (VS) or the overall throughflow quantity and the desired temperature (TS).

9. Appliance according to Claim 5, **characterized in that** the line (52) has arranged in it a second manually actuable shut-off valve (36) which follows the mixing valve (14).

10. Appliance according to Claim 5, **characterized in that** the mixing valve (14), the throughflow measuring device (32), the temperature measuring device (34) and the first shut-off valve (38) are combined to form a structural unit designed as an automatically operating mixing tap assembly (5).

11. Appliance according to Claims 9 and 10, **characterized in that** the second shut-off valve (36), too, is accommodated in the mixing tap assembly (5).

12. Appliance according to Claim 10, **characterized in that** a second manually operable mixing tap assembly (50) is connected in parallel to the automatically operating mixing tap assembly (5).

## Revendications

1. Procédé pour commander l'arrivée de liquide dans un récipient (22) qu'il s'agit de remplir jusqu'à un volume total prédéterminé (VS) avec une température de consigne prédéterminée (TS), dans lequel le débit de liquide, par exemple de l'eau mélangée, ainsi que la température de mélange (TM) du liquide sont déterminés et, lorsqu'on atteint une quantité globale prédéterminée, on interrompt l'amenée de liquide, **caractérisé en ce que** par augmentation ou réduction respectivement de la température de mélange (TM), on s'assure que, après terminaison de l'opération de remplissage, la quantité de chaleur (W) contenue dans le volume total (VS) du récipient (22) correspond au moins approximativement à la quantité de chaleur de consigne (WS) qui résulte du volume total prédéterminé (VS) et de sa température de consigne prédéterminée (TS).

2. Procédé selon la revendication 1, **caractérisé en ce que** l'on détermine en continu la quantité de chaleur réelle contenue dans un volume partiel déjà écoulé, en se basant sur le débit et sur la température de mélange (TM) mesurée depuis un instant de départ (t0), et on augmente ou on réduit ensuite le cas échéant la température de mélange (TM), en se basant sur cette détermination et en se basant sur la quantité de chaleur de consigne à accumuler (WS) dans le volume total prédéterminé (VS) à la température de consigne prédéterminée (TS), en modifiant un rapport de mélange entre un liquide à température plus élevée que la température de consigne (TS), de préférence de l'eau chaude, et un liquide à température plus basse que la température de consigne (TS), de préférence de l'eau froide.

3. Procédé selon la revendication 2, **caractérisé en ce que** la quantité de chaleur réelle contenue dans un volume partiel déjà écoulé est déterminée par intégration.

4. Appareil pour mettre en oeuvre le procédé selon l'une des revendications 1 à 3, dans lesquels un moyen de mesure de température (34) destiné à mesurer la température de mélange (TM) ainsi qu'un moyen de mesure de débit (32) sont agencés dans une conduite (52) pour un liquide, de préférence de l'eau mélangée, ces deux moyens étant raccordés à une unité de régulation (16) à laquelle est reliée, en termes de commande, une première valve de fermeture (38) agencée dans la conduite (52),
**caractérisé en ce que** l'unité de régulation (16) est adaptée, par augmentation ou réduction respectivement de la température de mélange (TM) à assurer que, après terminaison de l'opération de remplissage, la quantité de chaleur (W) contenue dans le volume total (VS) du récipient (22) correspond au moins approximativement à la quantité de chaleur de consigne (WS) qui résulte du volume total prédéterminé (VS) et de sa température de consigne prédéterminée (TS), et à interrompre l'amenée de liquide par actionnement de la première valve de fermeture lorsqu'une quantité totale prédéterminée a été atteinte.

5. Appareil selon la revendication 4, **caractérisé en ce qu'**une vanne de mélange (14), reliée en termes de commande à l'unité de régulation (16), est en outre agencée dans la conduite (52), ladite valve de mélange étant montée en amont du moyen de mesure de température (34) et du moyen de mesure de débit (32) et étant raccordée à une première conduite d'amenée (58') pour un liquide avec une température plus haute que la température de consigne (TS), de préférence de l'eau chaude, et à une seconde conduite d'amenée (58) pour un liquide avec une température plus basse que la température de consigne (TS), de préférence de l'eau froide, dans lequel l'unité de régulation (16) est adaptée à déterminer en continu la quantité de chaleur réelle contenue dans un volume partiel déjà écoulé, en se basant sur le débit et sur la température de mélange (TM) mesurée depuis un instant de départ (t0), et à augmenter ou réduire ensuite le cas échéant la température de mélange (TM), en se basant sur cette détermination et en se basant sur la quantité de chaleur de consigne à accumuler (WS) dans le volume total prédéterminé (VS) à la température de consigne prédéterminée (TS), en modifiant un rapport de mélange entre le liquide amené via la première conduite d'amenée (58') et le liquide amené via la seconde conduite d'amenée (58).

6. Appareil selon la revendication 5, **caractérisé en ce que** l'unité de régulation (16) détermine la quantité de chaleur réelle contenue dans un volume partiel déjà écoulé par intégration.

7. Appareil selon la revendication 5, **caractérisé en ce que** la vanne de mélange (14) comprend un moteur de positionnement (30) qui peut être piloté par l'unité de régulation (16).

8. Appareil selon la revendication 4, **caractérisé par** un appareil de télécommande (18) raccordé à l'unité de régulation (16), comprenant un clavier (40, 42) pour introduire au moins le volume total (VS) ou respectivement la quantité totale et la température de consigne (TS).

9. Appareil selon la revendication 5, **caractérisé en ce qu'**une seconde valve de fermeture (36) à actionnement manuel est agencée dans la conduite (52) et disposée en aval de la vanne de mélange (14).

10. Appareil selon la revendication 5, **caractérisé en ce que** la vanne de mélange (14), le moyen de mesure de débit (32), le moyen de mesure de température (34) et la première valve de fermeture (38) sont regroupés sous la forme d'une unité structurelle réalisée comme une robinetterie de mélange (5) à fonctionnement automatique.

11. Appareil selon les revendications 9 et 10, **caractérisé en ce que** la seconde valve de fermeture (36) est également intégrée dans la robinetterie de mélange (5).

12. Appareil selon la revendication 10, **caractérisé en ce qu'**une seconde robinetterie de mélange (50) susceptible d'être actionnée à la main est branché en parallèle à la robinetterie de mélange (5) à fonctionnement automatique.
